# EUROPEAN PATENT SPECIFICATION

(11) **EP 3 806 057 B1**
(45) Date of publication and mention of the grant of the patent: **26.11.2025**
(21) Application number: 19811068.6
(22) Date of filing: 16.05.2019
(51) Int. Cl.: G08B 17/10, G08B 17/00, G08B 17/06

(54) **HEAT SENSOR**
WÄRMESENSOR
CAPTEUR DE CHALEUR

(30) Priority: 31.05.2018 JP 2018105268; 10.10.2018 JP 2018191906
(43) Date of publication of application: 14.04.2021
(73) Proprietor: Panasonic Intellectual Property Management Co., Ltd., Osaka-shi, Osaka 540-6207 (JP)
(72) Inventor: MORI, Yasuhiro, Osaka-shi, Osaka 540-6207 (JP); HASHIMOTO, Yusuke, Osaka-shi, Osaka 540-6207 (JP)
(74) Representative: Müller-Boré & Partner Patentanwälte PartG mbB
(86) International application number: PCT/JP2019/019482
(87) International publication number: WO 2019/230418

(56) References cited:
- WO-A1-2011/089879
- JP-A- 2009 230 510
- JP-A- 2009 230 510
- JP-A- 2014 126 878

## Description

### TECHNICAL FIELD

The present disclosure relates to a heat sensor which senses heat generated by fire or the like.

### BACKGROUND ART

Heat sensors which sense heat generated by fire or the like have been conventionally known. Patent Literature 1 (PTL1) discloses, as one example of a heat sensor of this type, a heat sensor which includes: a housing body; a thermistor which is arranged outside of the housing body; and a protection frame which is provided so as to cover the outside of the thermistor. In the aforementioned heat sensor, heat of gas flowing towards the heat sensor upon the fire is detected by the use of the thermistor arranged outside of the housing body.

JP 2009 230510 A describes a thermistor connected to a circuit board, the thermistor being is installed in a casing. A first opening whose height becomes the same as the height of the installation position of the thermistor is installed so that hot air flowing from the outer periphery of the casing can flow to the top end of the thermistor. Also, a sounding body as an obstacle is installed in a different space separated by the circuit board.

WO 2011/089879 A1 describes a detector provided with: a labyrinth for shielding against external light to prevent the light from directly entering the detector; and a smoke detection unit for receiving on a light reception unit light diffused by the smoke flowing into a chamber which is provided with an insect net covering the periphery of the labyrinth, wherein the light reception unit is disposed in the chamber so as not to directly receive the light emitted from a light emitting unit. A cover of the detector receives a thermal air current and has an opening in the surface thereof. An electrochemical gas sensor, which brings gas generated by a fire into contact with an electrolyte solution through the opening and thereby detects the gas by use of electrodes, is disposed within the cover behind the opening.

JP 2014 126878 A describes a temperature observation chip is arranged in each of a plurality of monitoring blocks into which a monitoring area A is virtually divided, to observe a temperature in the monitoring block, and the temperature is transmitted to a monitoring device. The monitoring device determines a fire in the monitoring area A on the basis of observed temperatures in respective monitoring blocks observed by the plurality of temperature observation chips and transmits a fire detection signal to a receiver to cause output of a fire alarm.

### Citation List

### Patent Literature

PTL 1: Japanese Unexamined Patent Application Publication No. H10-334360

### SUMMARY OF THE INVENTION

### TECHNICAL PROBLEM

There have been demands in recent years for making a heat sensor thinner for the purpose of improving the appearance of the inside of a building where the heat sensor is installed. However, the heat sensor disclosed in PTL 1 faces a problem that the thickness of the heat sensor becomes large.

Thus, it is an object of the present disclosure to make a heat sensor thinner.

### SOLUTION TO PROBLEM

This object is solved by a heat sensor according to independent claim 1. Additional embodiments are defined in the dependent claims.

### ADVANTAGEOUS EFFECT OF INVENTION

The present disclosure makes it possible to make a heat sensor thinner.

### BRIEF DESCRIPTION OF DRAWINGS

FIG. 1 is a view illustrating a heat sensor of a comparative example.
FIG. 2 is a perspective view of a heat sensor according to an embodiment.
FIG. 3 is a perspective view of the heat sensor according to the embodiment when viewed from a direction different from that in FIG. 2.
FIG. 4 is a diagram illustrating a schematic configuration of the heat sensor according to the embodiment.
FIG. 5A is a view illustrating a vertical airflow flowing towards the heat sensor according to the embodiment.
FIG. 5B is a view illustrating a horizontal airflow flowing towards the heat sensor of the embodiment.
FIG. 6 is a view illustrating the heat sensor according to the embodiment with (a) providing an elevation view and (b) providing a bottom view.
FIG. 7 is a top view of the heat sensor according to the embodiment.
FIG. 8 is a partially enlarged sectional view of the heat sensor illustrated in (a) of FIG. 6.
FIG. 9 is a view illustrating a region where a heat detection unit is arranged in the heat sensor according to the embodiment.
FIG. 10 is a top view of a heat sensor according to Variation 1 of the embodiment.
FIG. 11 is a view illustrating a heat sensor according to Variation 2 of the embodiment with (a) providing an elevation view and (b) providing a bottom view.
FIG. 12 is a view illustrating a region where a heat detection unit is arranged in the heat sensor according to Variation 2 of the embodiment.
FIG. 13 is a view illustrating a heat sensor according to Variation 3 of the embodiment with (a) providing an elevation view and (b) providing a bottom view.
FIG. 14 is a view illustrating a heat sensor according to Variation 4 of the embodiment with (a) providing an elevation view and (b) providing a bottom view.
FIG. 15 is a bottom view illustrating a heat sensor according to Variation 5 of the embodiment.
FIG. 16 is a bottom view illustrating a heat sensor according to Variation 6 of the embodiment with (a) providing an elevation view and (b) providing a bottom view.
FIG. 17 is a view illustrating a heat sensor according to Variation 7 of the embodiment with (a) providing an elevation view and (b) providing a bottom view.
FIG. 18 is a bottom view illustrating a heat sensor according to Variation 8 of the embodiment.
FIG. 19 is a view illustrating a heat sensor according to Variation 9 of the embodiment with (a) providing an elevation view and (b) providing a bottom view.

### DESCRIPTION OF EXEMPLARY EMBODIMENT

### [Background Reaching Present Disclosure]

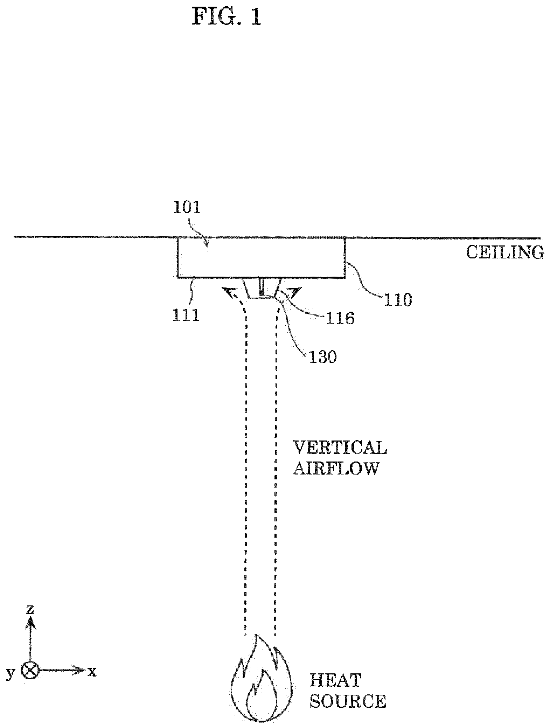

First, background reaching the present disclosure will be described with reference to a comparative example of FIG. 1. FIG. 1 is a view illustrating heat sensor 101 of the comparative example.

Heat sensor 101 of the comparative example includes: housing 110 of a cylindrical shape having bottom part 111; and heat detection unit 130 which detects heat of gas. Heat detection unit 130 is, for example, a thermistor provided with a lead wire, which is arranged perpendicularly below bottom part 111 and arranged at the center of housing 110 when viewed vertically from the bottom. Moreover, housing 110 is provided with protection frame 116 which covers heat detection unit 130.

As illustrated in FIG. 1, when there is a heat source such as frame perpendicularly below heat sensor 101, a vertical airflow (updraft) flowing towards heat sensor 101 is generated. The vertical airflow changes a flow direction near heat sensor 101 under the influence of the outer shape of heat sensor 101, resulting in a change to a flow in a diagonal direction including a flow component directed from the center towards the outer periphery of housing 110. Thus, heat detection unit 130 needs to be arranged in heat sensor 101 of the comparative example in a manner remarkably projecting perpendicularly downward to make contact with the vertical airflow. Consequently, there arises a problem that the projection dimension of protection frame 116 covering heat detection unit 130 increases, resulting in an increase in the thickness of heat sensor 101.

On the contrary, a heat detection unit is arranged in a peripheral region different from the center of a housing in a heat sensor of the present disclosure when the heat sensor is viewed perpendicularly from a bottom. The vertical airflow flows while approaching the housing in the peripheral region, and thus it is possible to reduce the projection dimension of the heat sensor required for the contact with the vertical airflow. Consequently, it is possible to make the heat sensor thinner.

Hereinafter, the heat sensor according to the embodiment of the present disclosure will be described in detail with reference to the drawings. Note that each embodiment described below illustrates one detailed example of the present disclosure. Therefore, numerical values, shapes, materials, components, arrangement, and connection modes of the components, etc., each form one example and are not intended to limit the present disclosure. Therefore, of the components in the embodiment described below, those not disclosed in any independent claim indicating the highest concept of the present disclosure will be described as optional components.

Moreover, each drawing is a schematic diagram and does not necessarily provide a precise illustration. Therefore, for example, scaling do not necessarily agree with each other in the different drawings. Moreover, substantially same configurations are practically provided with same signs in the drawings and overlapping explanation will be omitted or simplified.

Moreover, an x-axis, a y-axis, and a z-axis illustrate three axes of a three-dimensional orthogonal coordinate system in the present description and drawings. In the present embodiment, a z-axis direction is a vertical direction and a direction vertical to the z-axis (a direction parallel to a plane xy) is a horizontal direction. Note that a negative direction of the z-axis is directed vertically downward.

### EMBODIMENT

### [1-1. Configuration of Heat Sensor]

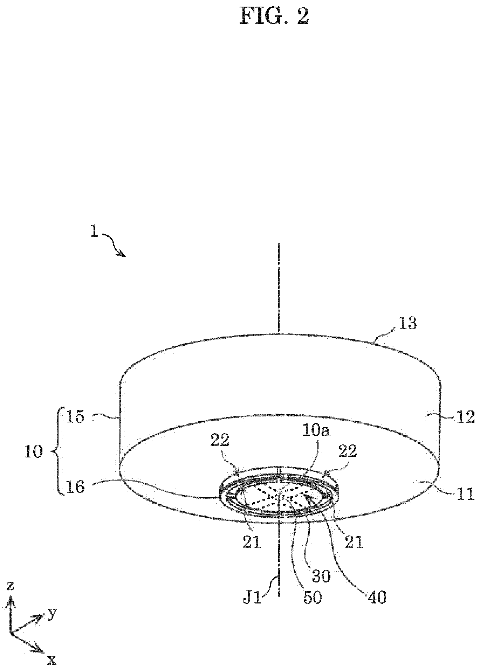

The configuration of the heat sensor according to the embodiment will be described with reference to FIGS. 2 to 9. The heat sensor according to the present embodiment is a fire report device which detects, for example, fire in a building and reports, to an outside, that the fire has occurred.

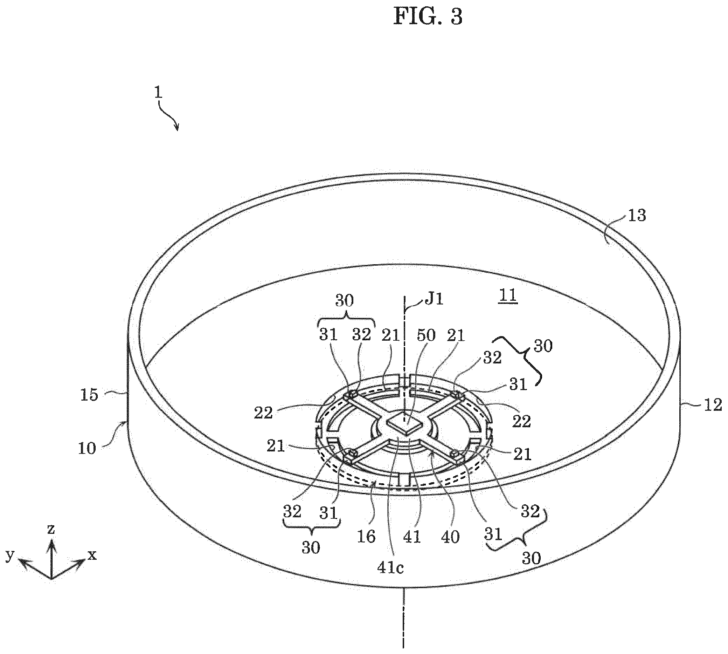

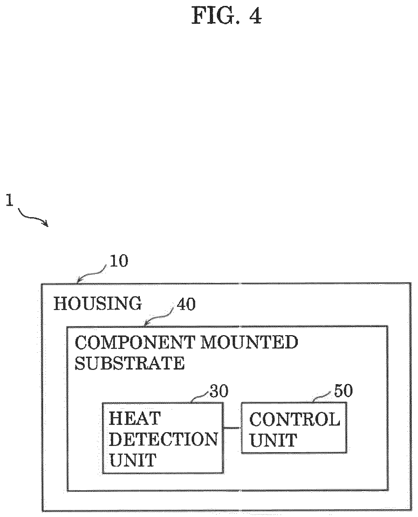

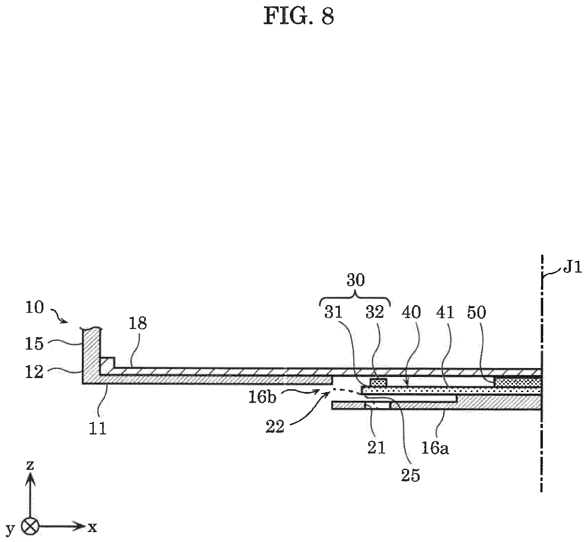

FIG. 2 is a perspective view of heat sensor 1 according to the embodiment. FIG. 3 is a perspective view of heat sensor 1 when viewed from a direction different from that in FIG. 2. FIG. 4 is a diagram illustrating a schematic configuration of heat sensor 1. Note that FIG. 3 illustrates a view when cover 18 (see FIG. 8) is removed from housing 10.

As illustrated in FIGS. 2 and 3, heat sensor 1 includes: housing 10 of a cylindrical shape which forms the outline of heat sensor 1; and component mounted substrate 40 which is provided in housing 10. As illustrated in FIG. 4, component mounted substrate 40 includes: heat detection unit 30 which detects heat of gas; and control unit 50 which determines the presence or absence of fire based on a result obtained at heat detection unit 30.

Heat detection unit 30 is provided inside of housing 10. Heat detection unit 30 has a heat detection element in form of a chip thermistor. For example, the height of heat detection unit 30 can be made smaller in a case where the heat detection element is a chip thermistor than in a case where the heat detection element is a thermistor provided with a lead wire.

The heat detection element is connected to control unit 50 via a wire formed at component mounted substrate 40. Note that FIG. 4 illustrates one heat detection unit 30 as one example, but in accordance with the invention a plurality of heat detection units 30 are actually connected to control unit 50. A configuration of heat detection unit 30 will be described in detail later on.

Control unit 50 is composed of IC chips such as, for example, a central processing unit (CPU), a random access memory (RAM), and a read only memory (ROM). For example, control unit 50 determines the presence or absence of fire depending on whether or not an average value of voltages outputted from a plurality of heat detection elements is higher than a predefined threshold value. Note that control unit 50 may compare a maximum value or a minimum value of the voltages outputted from the plurality of heat detection elements with the predefined threshold values to determine the presence or absence of fire.

Moreover, control unit 50 includes a report circuit (not illustrated) for reporting a result of the determination of the presence or absence of fire. The report circuit is connected to, for example, a server serving as an external management device. Control unit 50 notifies the server of the presence or absence of fire via the report circuit. The report circuit may be connected with, for example, a speaker or a light-emitting diode (LED) for notifying the surroundings that the fire has occurred.

Heat sensor 1 having the aforementioned configuration is disposed, for example, on the ceiling or a wall of a building such as a factory or a household. Hereinafter, a description will be provided, referring to, as an example, a case where heat sensor 1 is disposed on the ceiling of the building.

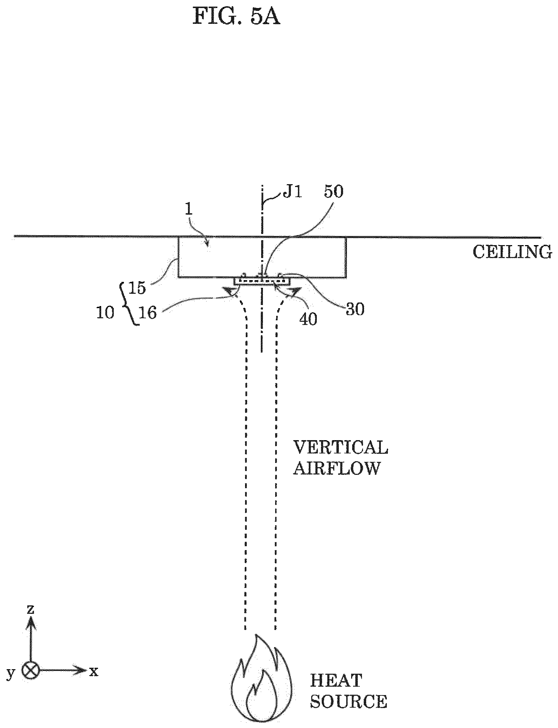

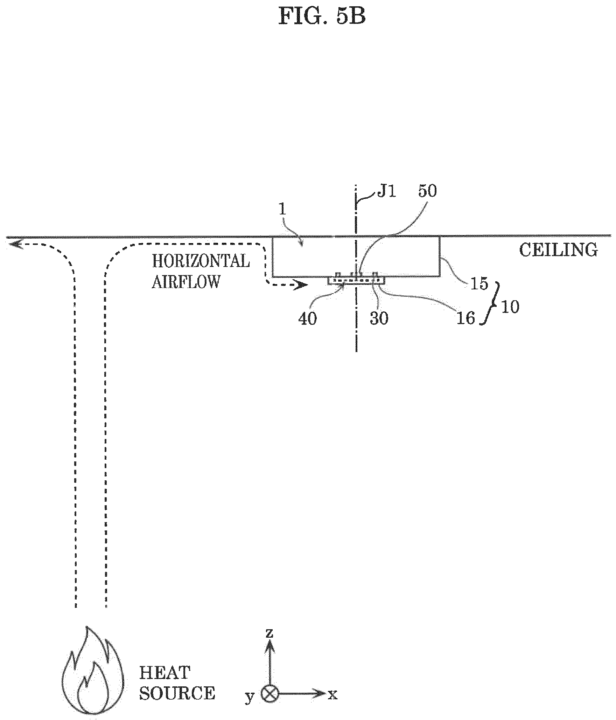

FIG. 5A is a view illustrating a vertical airflow flowing towards heat sensor 1. FIG. 5B is a view illustrating a horizontal airflow flowing towards heat sensor 1.

As illustrated in FIG. 5A, when a heat source is located perpendicularly below heat sensor 1, a vertical airflow generated by the heat source flows towards heat sensor 1. As illustrated in FIG. 5B, when the heat source is located at a position different from a position located perpendicularly below heat sensor 1, a horizontal airflow flowing along the ceiling flows towards heat sensor 1.

Heat sensor 1 according to the present embodiment has a structure thinner than that of a conventional one and also has a structure capable of sensing the heat of gas caused to flow by at least either one of the vertical airflow and the horizontal airflow. Hereinafter, the structure of heat sensor 1 will be described in detail.

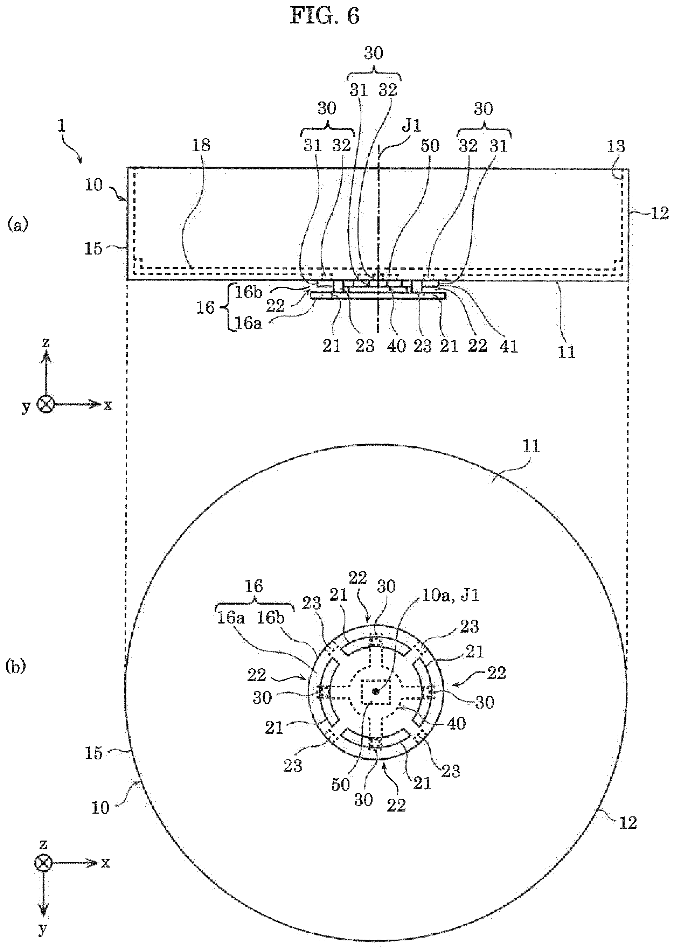

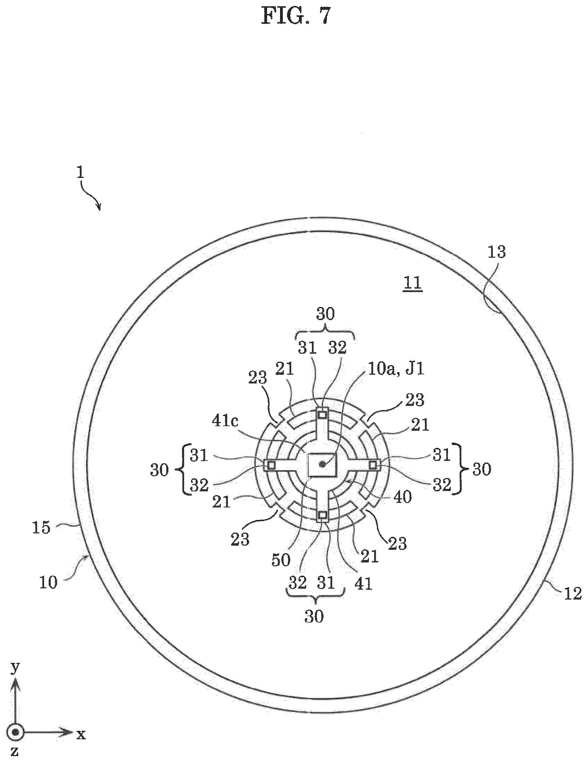

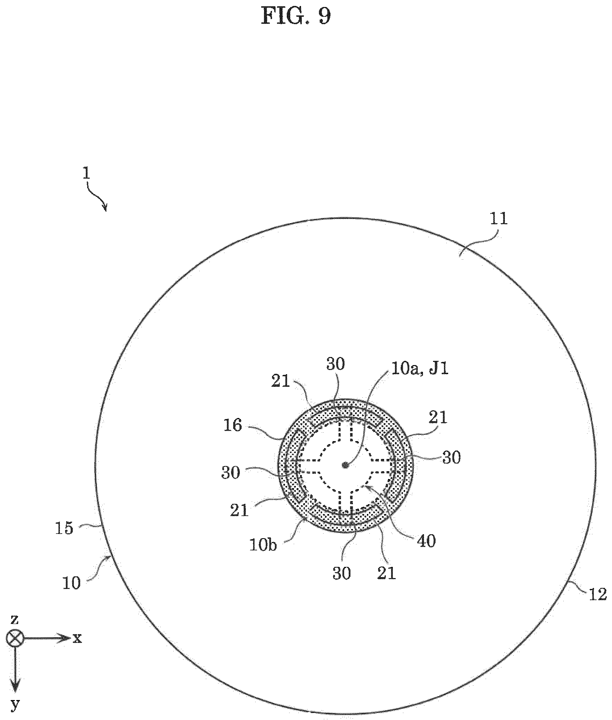

FIG. 6 is a view illustrating heat sensor 1 with (a) providing an elevation view and (b) providing a bottom view. FIG. 7 is a top view of heat sensor 1. FIG. 8 is a partially enlarged sectional view of heat sensor 1 illustrated in (a) of FIG. 6. FIG. 9 is a diagram illustrating a region where heat detection units 30 are arranged in heat sensor 1. Note that FIG. 7 illustrates a case where cover 18 is removed from housing 10. Moreover, FIG. 8 only illustrates a sectional view and does not illustrate a configuration located in a depth direction.

As illustrated in FIGS. 6 to 8, heat sensor 1 includes housing 10 and component mounted substrate 40. Note that (b) of FIG. 6 illustrates, by broken lines, the entire shape of component mounted substrate 40 including the outer shape of component mounted substrate 40 viewed through first holes 21 (the same applies to FIG. 9).

Housing 10 has: housing body 15; and projection part 16 which is connected to housing body 15. Housing body 15 is of a cylindrical shape having bottom part 11 and side part 12. Projection part 16 is of a cylindrical shape and projects outwardly from bottom part 11 of housing body 15. The projection dimension of projection part 16 projecting from bottom part 11 is, for example, greater than 0 mm and smaller than 9 mm. The diameter of projection part 16 is less than or equal to a half of the diameter of housing body 15.

Moreover, housing 10 has opening part 13 which is located oppositely to bottom part 11. Opening part 13 is a portion in contact with the ceiling when heat sensor 1 is installed on the ceiling of the building. Housing 10 is formed of, for example, heat-resistant resin.

Housing 10 has first holes 21 and second holes 22 as inlets and outlets for causing gas flowing from one side to flow out of another side. Second holes 22 are connected to first holes 21 via inner path 25, to be described later on.

Each of first holes 21 and second holes 22 is not provided at center 10a of housing 10 but provided in peripheral region (a region indicated by hatching dots of FIG. 9) 10b different from center 10a when heat sensor 1 is viewed form central axis J1 of housing 10. In the present embodiment, the diameter of projection part 16 is less than or equal to a half of the diameter of housing body 15, and thus peripheral region 10b is located more closely to center 10a than the outer periphery. More specifically, first holes 21 and second holes 22 are provided in a region ranging between greater than or equal to 0.2 times and less than or equal to 0.5 times the diameter of the housing body.

As illustrated in (b) of FIG. 6, a plurality of first holes 21 are provided at bottom surface part 16a of projection part 16. Each first hole 21 is formed along the outer periphery of bottom surface part 16a and has an arc shape when heat sensor 1 is viewed from center axis J1. Note that the shape of first hole 21 is not limited to the arc shape and first hole 21 may have a shape of a polygon, a circle, an oval, or a crescent. Moreover, first holes 21 are arranged in rotational symmetry at equiangular intervals with respect to central axis J1 as a center when heat sensor 1 is viewed from central axis J1. Note that first holes 21 may not be arranged at the equiangular intervals with respect to central axis J1 as a center. As illustrated in (a) of FIG. 6, first holes 21 are provided at bottom surface part 16a with the hole axis of first hole 21 in parallel to central axis J1.

As illustrated in FIG. 3 and (a) of FIG. 6, a plurality of second holes 22 are provided at side surface part 16b of projection part 16. Each second hole 22 is provided at side surface part 16b with the hole axis of second hole 22 vertical to central axis J1. Each second hole 22 is formed along the outer periphery of side surface part 16b. A plurality of props 23 are provided between second holes 22 adjacent in a circumference direction. The plurality of props 23 connect together housing body 15 and bottom surface part 16a.

As illustrated in FIG. 8, housing 10 has inner path 25 which links together first hole 21 and second hole 22. Gas directed to heat sensor 1 by a vertical airflow flows in from first hole 21 and flows out of second hole 22 through inner path 25. On the other hand, gas directed to heat sensor 1 by a horizontal airflow flows in from second hole 22 and flows out of first hole 21 via inner path 25. Alternatively, the gas directed towards heat sensor 1 by the horizontal airflow flows in from second hole 22 and flows out of another second hole 22 located oppositely to second hole 22 in which the gas has flown. Heat detection unit 30 described above is arranged at a position in contact with the gas flowing through inner path 25. Heat detection unit 30 is formed as part of component mounted substrate 40.

Component mounted substrate 40 is arranged inside of housing 10 and fixed at an inner bottom of bottom part 11 of housing 10 by a fastening member or the like. Component mounted substrate 40 is arranged with the main surface of component mounted substrate 40 orthogonal to central axis J1, that is, along a horizontal direction. Cover 18 is provided inside of housing 10 so as to cover component mounted substrate 40.

Component mounted substrate 40 includes: substrate body 41, control unit 50 which is mounted on substrate body 41; and a plurality of heat detection elements 32 which are mounted on substrate body 41.

As illustrated in FIG. 7, substrate body 41 has: central part 41c of a plate-like shape; and support units 31 of a bar-like shape extending in all directions from the outer periphery of central part 41c. Control unit 50 is mounted at central part 41c of substrate body 41 and each of the plurality of heat detection elements 32 is mounted at an end part of each support unit 31. That is, when heat sensor 1 is viewed from central axis J1, control unit 50 is arranged at the center of housing 10, and heat detection element 32 is arranged more closely to the outer periphery than control unit 50. Moreover, when heat sensor 1 is viewed from central axis J1, heat detection unit 30 is arranged in correspondence with the position of first hole 21. More specifically, when heat sensor 1 is viewed from central axis J1, heat detection unit 30 is arranged at a position overlapping first hole 21.

Heat detection unit 30 has: heat detection element 32 and support unit 31 which supports respective heat detection elements 32. Note that support unit 31 is part of substrate body 41. Heat detection element 32 and support unit 31 are arranged inside of housing 10. More specifically, the end part of support unit 31 is arranged so as to make contact with gas passing through inner path 25 (see FIG. 8). Consequently, heat detection unit 30 can detect heat of the gas passing through inner path 25.

Moreover, as illustrated in FIG. 9, when heat sensor 1 is viewed from central axis J1, heat detection units 30 are arranged in peripheral region 10b different from center 10a of housing 10. In the present embodiment, peripheral region 10b is located more closely to center 10a than to the outer periphery.

Since the vertical airflow flows while approaching housing 10 in peripheral region 10b, it is possible to reduce the projection dimension of heat detection unit 30 required for the contact with the vertical airflow. That is, arranging heat detection unit 30 in peripheral region 10b as is the case with the present embodiment makes it is possible to reduce the projection dimension of heat detection unit 30 in a direction of central axis J1, comparted to, for example, a case where heat detection unit 30 is arranged at center 10a of housing 10. Consequently, it is possible to make heat sensor 1 thinner. Moreover, component mounted substrate 40 is arranged with the main surface of component mounted substrate 40 orthogonal to central axis J1, which makes it possible to make heat sensor 1 thinner.

### [1-2. Effects, etc.]

Heat sensor 1 according to the present embodiment includes: housing 10 of a cylindrical shape having bottom part 11; and heat detection units 30 which detect heat of gas. Housing 10 has first holes 21 and second holes 22 from one side of which gas flows in and from another side of which the gas flows out. Heat detection units 30 are arranged in peripheral region 10b different from center 10a of housing 10 when heat sensor 1 is viewed from central axis J1.

As described above, arranging heat detection units 30 in peripheral region 10b makes it possible to reduce the projection dimension of heat detection units 30 in the direction of central axis J1. Consequently, it is possible to make heat sensor 1 thinner.

Moreover, each of first holes 21 and second holes 22 is not provided at center 10a of housing 10 but may be provided in peripheral region 10b when heat sensor 1 is viewed from central axis J1.

As described above, structuring heat sensor 1 to have no hole formed at center 10a of housing 10 makes it possible to guide the vertical airflow to peripheral region 10b of housing 10. Consequently, it is possible to reduce the projection dimension of heat detection units 30 in the direction of central axis J1 and make heat sensor 1 thinner.

Moreover, housing 10 may have projection part 16 of a cylindrical shape projecting outwardly from bottom part 11, first holes 21 may be provided at bottom surface part 16a of projection part 16, and second holes 22 may be provided at side surface part 16b of projection part 16.

As described above, providing first holes 21 at bottom surface part 16a and second holes 22 at side surface part 16b makes it possible to provide heat sensor 1 capable of handling both a vertical airflow and a horizontal airflow.

Moreover, housing 10 may have inner path 25 which links together first holes 21 and second holes 22, and heat detection units 30 may be arranged at positions in contact with gas flowing through inner path 25.

Consequently, it is possible to detect the heat of the gas flowing through inner path 25 by use of heat detection units 30.

Moreover, heat detection units 30 are arranged in correspondence with first holes 21 when heat sensor 1 is viewed from central axis J1.

Consequently, it is possible to detect the heat of the gas flowing in from first hole 21 or the gas flowing out from first hole 21 by use of heat detection unit 30.

Moreover, heat detection unit 30 may have heat detection element 32 and support unit 31 which supports heat detection element 32, and heat detection element 32 and support unit 31 may be arranged inside of housing 10.

Consequently, it is possible to detect the heat inside of housing 10 by use of heat detection unit 30.

Moreover, heat sensor 1 further includes control unit 50 which determines the presence or absence of fire based on a detection result obtained at heat detection unit 30. Control unit 50 may be arranged at the center of housing 10 and heat detection element 32 may be arranged more closely to the outer periphery than control unit 50 when heat sensor 1 is viewed from central axis J1.

Consequently, it is possible to detect heat in a region near the outer periphery of housing 10 by use of heat detection element 32.

Moreover, component mounted substrate 40 may be fixed at bottom part 11 of housing 10, component mounted substrate 40 may include: substrate body 41; and control unit 50 and heat detection elements 32 which are mounted on substrate body 41. Support unit 31 may be part of substrate body 41.

As described above, mounting heat detection elements 32 on substrate body 41 makes it possible to reduce the height of heat detection unit 30. Consequently, it is possible to make heat sensor 1 thinner.

### [1-3. Variation 1 of Embodiment]

Next, heat sensor 1A according to Variation 1 of the embodiment will be described. Variation 1 will be described, referring to an example in which support unit 31 of heat detection unit 30 forming component mounted substrate 40 is formed along the shape of first hole 21.

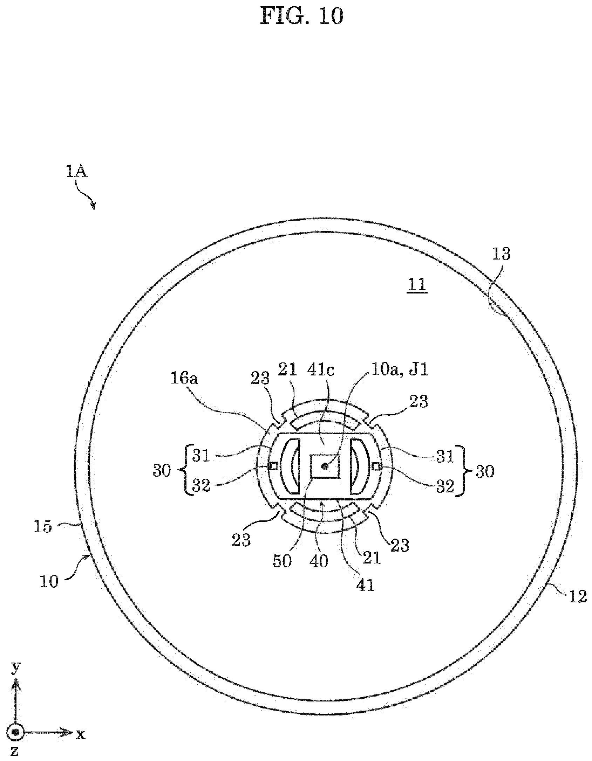

FIG. 10 is a top view of heat sensor 1A according to Variation 1. Note that FIG. 10 illustrates a view in a case where cover 18 is removed from housing 10.

Component mounted substrate 40 is arranged inside of housing 10 and fixed at the inner bottom of bottom part 11 of housing 10 by a fastening member or the like. Component mounted substrate 40 includes substrate body 41, control unit 50, and a plurality of heat sensing elements 32.

Substrate body 41 has: central part 41c; and a pair of support units 31 which are provided on both sides of central part 41c. Control unit 50 is mounted on central part 41c of substrate body 41 and the plurality of heat sensing elements 32 are mounted on the end parts of support units 31.

Heat detection unit 30 is arranged in correspondence with first hole 21 when heat sensor 1A is viewed from central axis J1. More specifically, the end part of support unit 31 has an arc shape and is arranged in correspondence with first hole 21 of the arc shape. Arranging the end part of support unit 31 in correspondence with first hole 21 of heat detection unit 30 of Variation 1 as described above increases a heat receiving area than in the embodiment described above, resulting in a structure such that the heat is easily received from the gas flowing through inner path 25.

Heat detection unit 30 is arranged in peripheral region 10b different from center 10a of housing 10 when heat sensor 1A is viewed from central axis J1 even in heat sensor 1A of Variation 1. Arranging heat detection unit 30 in peripheral region 10b as described above makes it possible to reduce the projection dimension of heat detection unit 30 in the direction of central axis J1. Consequently, it is possible to make heat sensor 1A thinner.

### [1-4. Variation 2 of Embodiment]

Next, heat sensor 1B according to Variation 2 of the embodiment will be described. Variation 2 will be described, referring to an example in which heat detection units 30 are arranged more closely to the outer periphery than the center of housing 10 when heat sensor 1B is viewed from central axis J1.

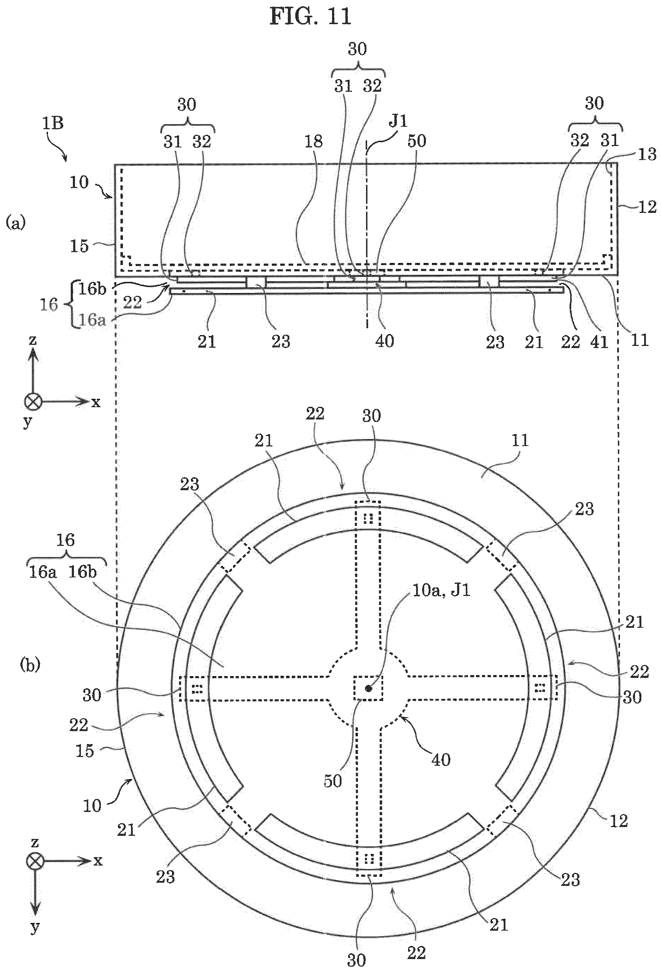

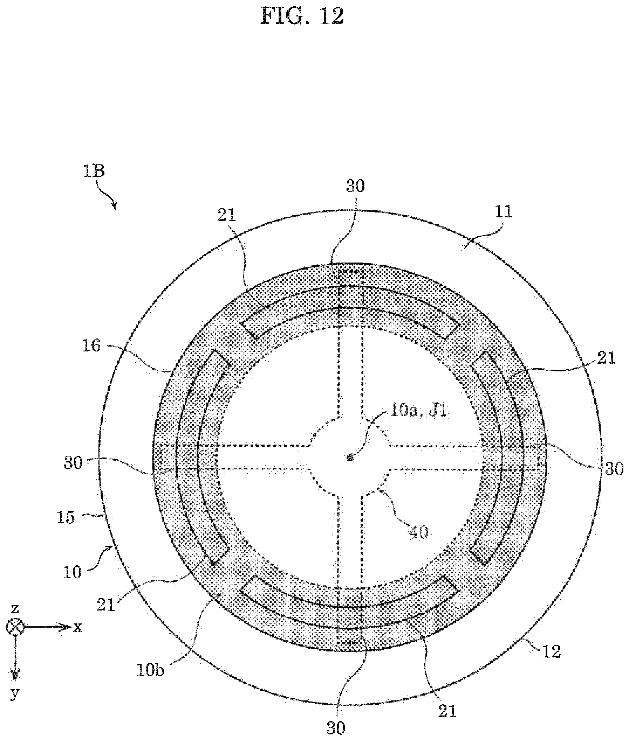

FIG. 11 is a view illustrating heat sensor 1B according to Variation 2, with (a) providing an elevation view and (b) providing a bottom view. FIG. 12 is a view illustrating a region where heat detection units 30 are arranged in heat sensor 1B according to Variation 2.

As illustrated in FIG. 11, heat sensor 1B includes housing 10 and component mounted substrate 40. Note that (b) of FIG. 11 illustrates, by broken lines, the entire outer shape of component mounted substrate 40 including the outer shape of component mounted substrate 40 viewed through first holes 21 (the same applies to FIG. 12).

Housing 10 has: housing body 15; and projection part 16 which is connected to housing body 15. Housing body 15 is of a cylindrical shape having bottom part 11 and side part 12. Projection part 16 is of a cylindrical shape projecting outwardly from bottom part 11 of housing body 15. The diameter of projection part 16 in the present variation is greater than 0.5 times and smaller than one times the diameter of housing body 15.

Each of first holes 21 and second holes 22 is not provided at center 10a of housing 10 but provided in peripheral region (a region indicated by a hatching dot of FIG. 12) 10b different from center 10a when heat sensor 1B is viewed from central axis J1. In the present variation, the diameter of projection part 16 is 0.5 times greater than the diameter of housing body 15, and thus peripheral region 10b is located more closely to the outer periphery than to center 10a. More specifically, first holes 21 and second holes 22 are provided in a region ranging between greater than 0.5 times and less than one times the diameter of housing body 15.

As illustrated in FIG. 12, heat detection units 30 are arranged in peripheral region 10b different from center 10a of housing 10 when heat sensor 1B is viewed from central axis J1. Note that peripheral region 10b of the present variation is located more closely to the outer periphery than to center 10a.

The vertical airflow flows while approaching housing 10 in peripheral region 10b, which therefore makes it possible to reduce the projection dimension of heat detection units 30 required for the contact with the vertical airflow. Thus, arranging heat detection units 30 in peripheral region 10b as is the case with the present variation makes it possible to reduce the projection dimension of heat detection units 30 in the direction of central axis J1, compared to, for example, a case where heat detection units 30 are arranged at center 10a of housing 10. Consequently, it is possible to make heat sensor 1B thinner.

Moreover, in heat sensor 1B of Variation 2, peripheral region 10b is located more closely to the outer periphery than to the center of housing 10 when heat sensor 1B is viewed from central axis J1.

Consequently, it is possible to reduce the projection dimension of heat detection units 30 required for the contact with the vertical airflow when the vertical airflow flows while approaching housing 10 near the outer periphery of housing 10. Consequently, it is possible to reduce the projection dimension of heat detection units 30 in the direction of central axis J1 and make heat sensor 1B thinner.

### [1-5. Variation 3 to Variation 9 of Embodiment]

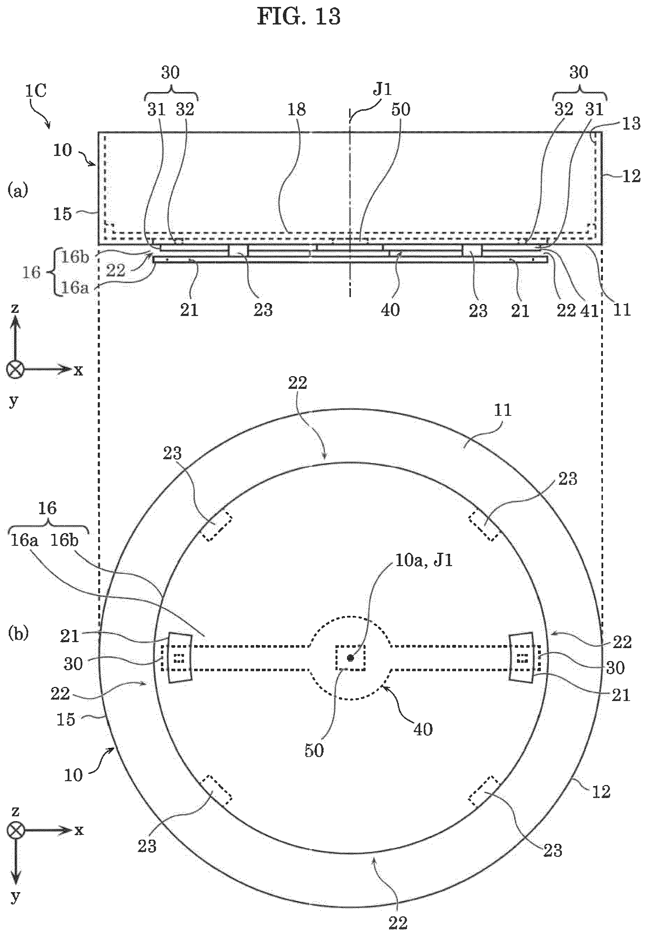

Next, Variation 3 to Variation 9 of the embodiment will be described with reference to FIGS. 13 to 19.

First, heat sensor 1C according to Variation 3 of the embodiment will be described. Variation 3 will be described, referring to an example in which heat sensor 1C has two heat detection units 30 and two first holes 21.

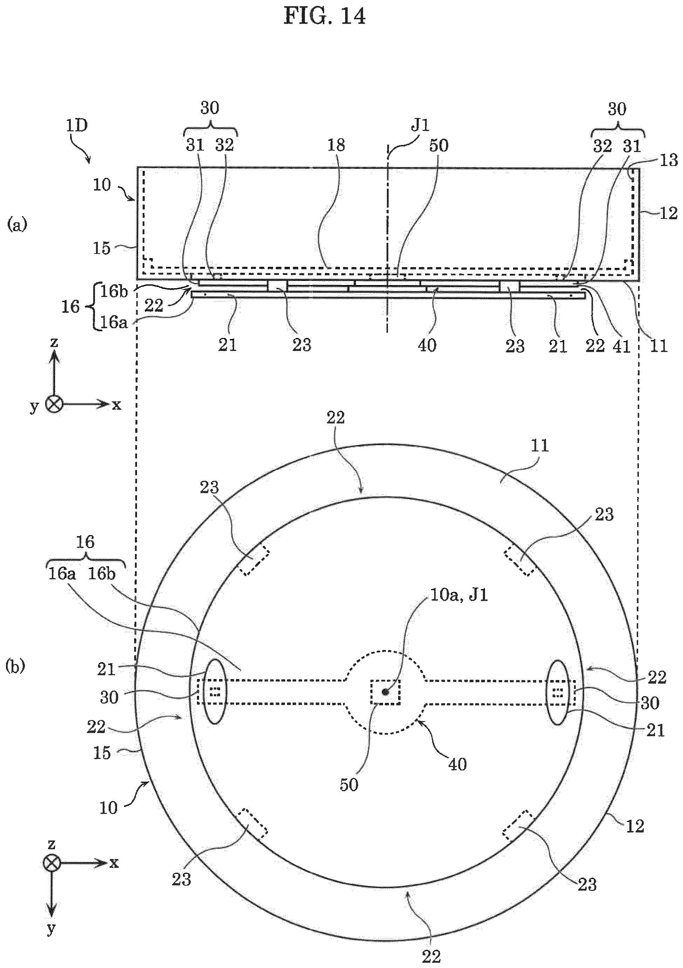

FIG. 13 is a view illustrating heat sensor 1C according to Variation 3 with (a) providing an elevation view and (b) providing a bottom view. Moreover, FIG. 13 illustrates, by broken lines, the entire outer shape of component mounted substrate 40 including the outer shape of component mounted substrate 40 viewed through first hole 21 (the same applies to FIGS. 14 to 17 and FIG. 19).

As illustrated in (a) of FIG. 13, housing 10 of heat sensor 1C has: housing body 15; and projection part 16 which is connected to housing body 15. Housing 10 has first holes 21 and second holes 22. Second holes 22 are connected to first holes 21 via an inner path of housing 10.

As illustrated in (b) of FIG. 13, each of first holes 21 and second holes 22 is not provided at center 10a of housing 10 but provided in peripheral region 10b (see FIG. 12) different from center 10a when heat sensor 1C is viewed from central axis J1 of housing 10.

Two first holes 21 are provided at bottom surface part 16a of projection part 16. Each first hole 21 is formed near the outer periphery of bottom surface part 16a and has an arc shape when heat sensor 1C is viewed from central axis J1. Note that the shape of first hole 21 is not limited to the arc shape and may be a shape other than the arc shape. The shape of first hole 21 may be, for example, a polygon such as a rectangle, a circle, an oval, a crescent, or a shape obtained by combining together the aforementioned shapes. Moreover, first holes 21 are arranged in rotational symmetry at intervals of 180 degrees with respect to central axis J1 as a center when heat sensor 1C is viewed from central axis J1. Note that first holes 21 may not be arranged at the aforementioned angular intervals or may not be arranged in rotational symmetry with respect to central axis J1 as a center.

Heat detection units 30 are arranged at positions in contact with the gas flowing through inner path 25. Heat detection units 30 are arranged in correspondence with the positions of first holes 21 when heat sensor 1C is viewed from central axis J1. More specifically, heat detection units 30 are arranged at positions overlapping first holes 21 when heat sensor 1C is viewed from central axis J1.

Next, heat sensor 1D according to Variation 4 of the embodiment will be described. Variation 4 will be described, referring to an example in which first holes 21 of heat sensor 1D have an oval shape.

FIG. 14 is a diagram illustrating heat sensor 1D according to Variation 4 with (a) providing an elevation view and (b) providing a bottom view.

As illustrated in (a) of FIG. 14, housing 10 of heat sensor 1D has: housing body 15; and projection part 16 which is connected to housing body 15. Housing 10 has first holes 21 and second holes 22. Second holes 22 are connected to first hole 21 via an inner path of housing 10.

As illustrated in (b) of FIG. 14, each of first holes 21 and second holes 22 is not provided at center 10a of housing 10 but provided in peripheral region 10b (see FIG. 12) different from center 10a when heat sensor 1D is viewed from central axis J1 of housing 10.

Two first holes 21 are provided at bottom surface part 16a of projection part 16. Each first hole 21 is formed near the outer periphery of bottom surface part 16a and has an oval shape when heat sensor 1D is viewed from central axis J1. Note that the shape of first hole 21 is not limited to the oval shape and may be a shape other than the oval shape. The shape of first hole 21 may be, for example, a polygon such as a rectangle, a circle, a crescent, or a shape obtained by combining together the aforementioned shapes. Moreover, first holes 21 are arranged in rotational symmetry at intervals of 180 degrees with respect to central axis J1 as a center when heat sensor 1D is viewed from central axis J1. Note that each first hole 21 may not be arranged at the aforementioned angular intervals and may not be arranged in rotational symmetry with respect to central axis J1 as a center.

Heat detection units 30 are arranged at positions in contact with the gas flowing through inner path 25. Heat detection units 30 are arranged in correspondence with the positions of first holes 21 when heat sensor 1D is viewed from central axis J1. More specifically, heat detection units 30 are arranged at positions overlapping first holes 21 when heat sensor 1D is viewed from central axis J1.

Next, heat sensor 1E according to Variation 5 of the embodiment will be described. Variation 5 will be described, referring to an example in which heat sensor 1E has three heat detection units 30 and three first holes 21.

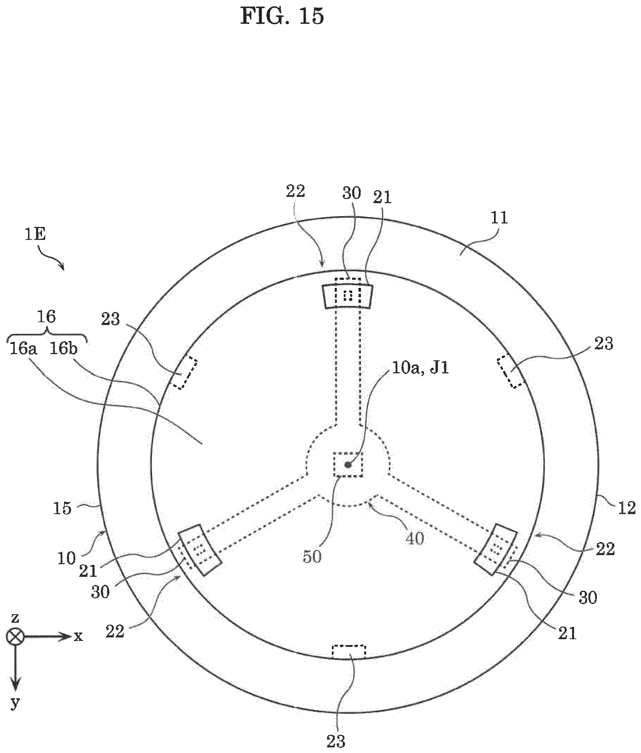

FIG. 15 is a bottom view illustrating heat sensor 1E according to Variation 5.

Housing 10 of heat sensor 1E has: housing body 15; and projection part 16 which is connected to housing body 15. Housing 10 has first holes 21 and second holes 22. Second holes 22 are connected to first holes 21 via an inner path of housing 10.

Each of first holes 21 and second holes 22 is not provided at center 10a of housing 10 but provided in peripheral region 10b (see FIG. 12) different from center 10a when heat sensor 1E is viewed from central axis J1.

Three first holes 21 are provided at bottom surface part 16a of projection part 16. Each first hole 21 is formed near the outer periphery of bottom surface part 16a and has an arc shape when heat sensor 1E is viewed from central axis J1. Note that the shape of first hole 21 is not limited to the are shape and may be a shape other than the arc shape. The shape of first hole 21 may be, for example, a polygon such as a rectangle, a circle, an oval, a crescent, or a shape obtained by combining together the aforementioned shapes. Moreover, first holes 21 are arranged in rotational symmetry at intervals of 120 degrees with respect to central axis J1 as a center when heat sensor 1E is viewed from central axis J1. Note that first holes 21 may not be arranged at the aforementioned angular intervals and may not be arranged in rotational symmetry with respect to central axis J1 as a center.

Heat detection units 30 are arranged at positions in contact with the gas flowing through inner path 25. Heat detection units 30 are arranged in correspondence with the positions of first holes 21 when heat sensor 1E is viewed from central axis J1. More specifically, heat detection units 30 are arranged at positions overlapping first holes 21 when heat sensor 1E is viewed from central axis J1.

Next, heat sensor 1F according to Variation 6 of the embodiment will be described. Variation 6 will be described, referring to an example in which first holes 21 are arranged at different angular intervals when heat sensor 1F is viewed from central axis J1.

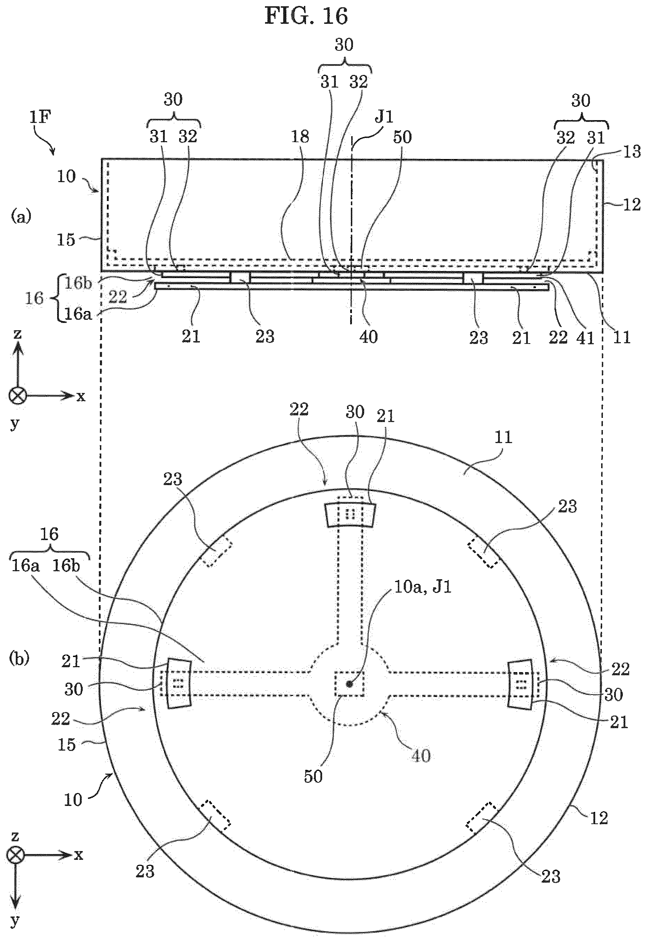

FIG. 16 is a bottom view illustrating heat sensor 1F according to Variation 6 with (a) providing an elevation view and (b) providing a bottom view.

Housing 10 of heat sensor 1F has: housing body 15; and projection part 16 which is connected to housing body 15. Housing 10 has first holes 21 and second holes 22. Second holes 22 are connected to first holes 21 via an inner path of housing 10.

Each of first holes 21 and second holes 22 is not provided at center 10a of housing 10 but provided in peripheral region 10b (see FIG. 12) different from center 10a when heat sensor 1F is viewed from central axis J1.

Three first holes 21 are provided at bottom surface part 16a of projection part 16. Each first hole 21 is formed near the outer periphery of bottom surface part 16a and has an arc shape when heat sensor 1F is viewed from central axis J1. Note that the shape of first hole 21 is not limited to the arc shape and may be a shape other than the arc shape. The shape of first hole 21 may be, for example, a polygon such as a rectangle, a circle, an oval, or a crescent. Moreover, three first holes 21 are arranged at different angular intervals of 90 degrees and 180 degrees with respect to central axis J1 as a center when heat sensor 1F is viewed from central axis J1. Note that first holes 21 may not be arranged at the aforementioned angular intervals with respect to central axis J1 as a center.

Heat detection units 30 are arranged at positions in contact with the gas flowing through inner path 25. Heat detection units 30 are arranged in correspondence with the positions of first holes 21 when heat sensor 1F is viewed from central axis J1. That is, three heat detection units 30 are also arranged at different angular intervals of 90 degrees and 180 degrees with respect to central axis J1 as a center. Note that heat detection units 30 may not be arranged at the aforementioned angular intervals with respect to central axis J1 as a center.

Next, heat sensor 1G according to Variation 7 of the embodiment will be described. Variation 7 will be described, referring to an example in which the positions of a plurality of heat detection units 30 and the positions of a plurality of first holes 21 partially agree with each other but do not partially agree with each other in other parts when heat sensor 1G is viewed from central axis J1.

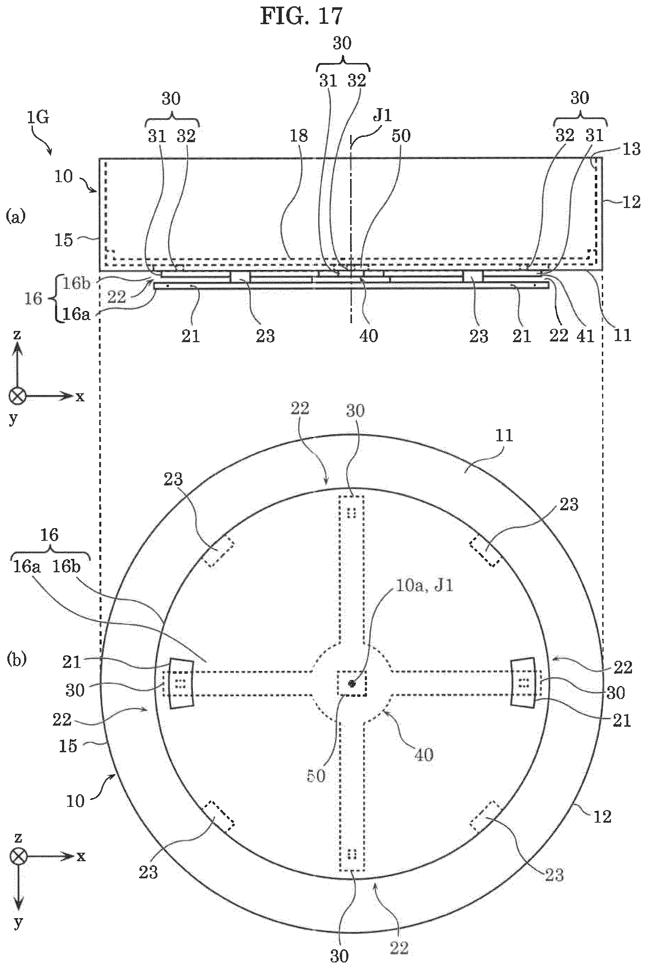

FIG. 17 is a diagram illustrating heat sensor 1G according to Variation 7 with (a) providing an elevation view and (b) providing a bottom view.

As illustrated in (a) of FIG. 17, housing 10 of heat sensor 1G has: housing body 15; and projection part 16 which is connected to housing body 15. Housing 10 has first holes 21 and second holes 22. Second holes 22 are connected to first holes 21 via an inner path of housing 10.

As illustrated in (b) of FIG. 17, each of first holes 21 and second holes 22 is not provided in center 10a of housing 10 but provided in peripheral region 10b (see FIG. 12) different from center 10a when heat sensor 1G is viewed from central axis J1.

Two first holes 21 are provided at bottom surface part 16a of projection part 16. Each first hole 21 is formed near the outer periphery of bottom surface part 16a and has an arc shape when heat sensor 1G is viewed from central axis J1. Note that the shape of first hole 21 is not limited to the arc shape and may be a shape other than the arc shape. The shape of first hole 21 may be, for example, a polygon such as a rectangle, a circle, an oval, a crescent, or a shape obtained by combining together the aforementioned shapes. Moreover, first holes 21 are arranged in rotational symmetry at intervals of 180 degrees with respect to central axis J1 as a center when heat sensor 1G is viewed from central axis J1. Note that first holes 21 may not be arranged at the aforementioned angular intervals or may not be arranged in rotational symmetry with respect to central axis J1 as a center.

Four heat detection units 30 are provided in housing 10. Two heat detection units 30 of four heat detection units 30 are provided at positions in correspondence with first holes 21 and other two heat detection units 30 are provided at positions not in correspondence with first holes 21 when heat sensor 1G is viewed from central axis J1. More specifically, two heat detection units 30 are arranged at the positions overlapping first holes 21 and other two heat detection units 30 are arranged at the positions not overlapping first holes 21. Other two heat detection units 30 are covered with bottom surface part 16a when viewed from central axis J1. As is the case with heat sensor 1G of Variation 7, first holes 21 and heat detection units 30 do not necessarily have to be provided at positions in agreement with each other and may be provided at positions not in agreement with each other when viewed from central axis J1.

Next, heat sensor 1H according to Variation 8 of the embodiment will be described. Variation 8 will be described, referring to an example in which the positions of a plurality of heat detection units 30 and the positions of a plurality of first holes 21 do not all agree with each other when heat sensor 1H is viewed from central axis J1.

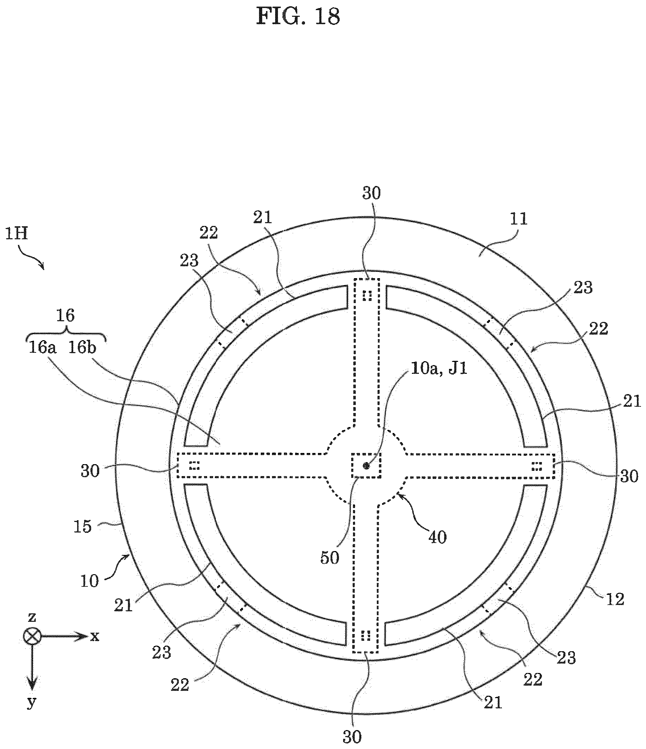

FIG. 18 is a bottom view illustrating heat sensor 1H according to Variation 8.

Housing 10 of heat sensor 1H has: housing body 15; and projection part 16 which is connected to housing body 15. Housing 10 has first holes 21 and second holes 22. Second holes 22 are connected to first holes 21 via an inner path of housing 10.

Each of first holes 21 and second holes 22 is not provided at center 10a of housing 10 but provided in peripheral region 10b (see FIG. 12) different from center 10a when heat sensor 1H is viewed from central axis J1.

Four first holes 21 are provided at bottom surface part 16a of projection part 16. Each first hole 21 is formed along the outer periphery of bottom surface part 16a and has an arc shape when heat sensor 1H is viewed from central axis J1. Note that the shape of first hole 21 is not limited to the arc shape and may be a shape other than the arc shape. The shape of first hole 21 may be, for example, a polygon, a triangle, an oval, a crescent, or a shape obtained by combining together the aforementioned shapes. Moreover, first holes 21 are arranged in rotational symmetry at intervals of 90 degrees with respect to central axis J1 as a center when heat sensor 1H is viewed from central axis J1. Note that first holes 21 may not be arranged at the aforementioned angular intervals and may not be arranged in rotational symmetry with respect to central axis J1 as a center.

Four heat detection units 30 are provided in housing 10. All of four heat detection units 30 are provided at positions not in correspondence with first holes 21 when heat sensor 1H is viewed from central axis J1. More specifically, four heat detection units 30 are arranged at the positions not overlapping first holes 21. Four heat detection units 30 are covered by bottom surface part 16a when viewed from central axis J1.

Next, heat sensor 1i according to Variation 9 of the embodiment will be described. Variation 9 will be described, referring to an example in which the positions of a plurality of heat detection units 30 and the positions of a plurality of first holes 21 partially agree with each other and do not partially agree with each other in other parts when heat sensor 1i is viewed from central axis J1.

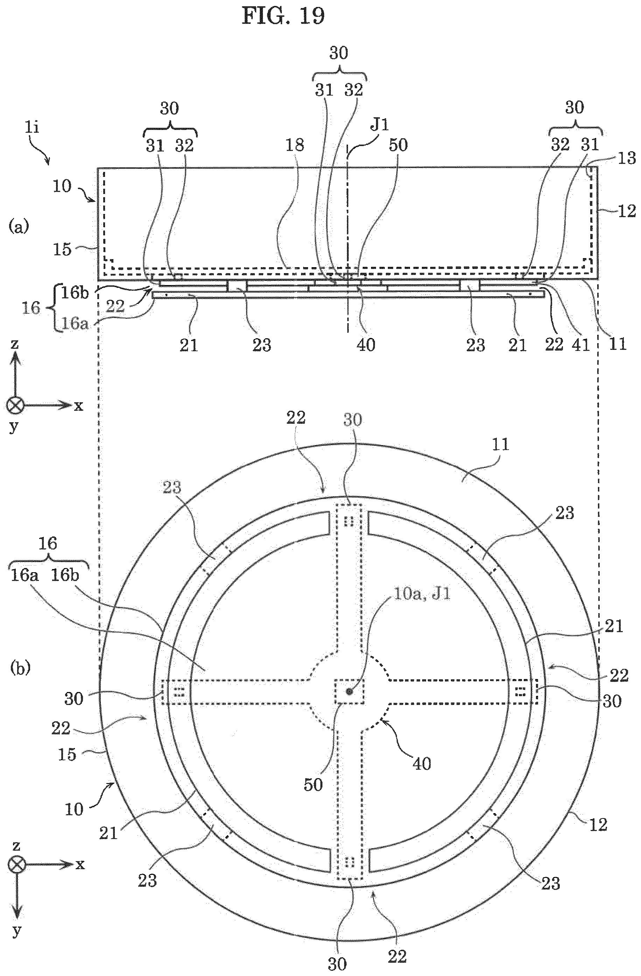

FIG. 19 is a view illustrating heat sensor 1i according to Variation 9 with (a) providing an elevation view and (b) providing a bottom view.

As illustrated in (a) of FIG. 19, housing 10 of heat sensor 1i has: housing body 15; and projection part 16 which is connected to housing body 15. Housing 10 has first holes 21 and second holes 22. Second holes 22 are connected to first holes 21 via an inner path of housing 10.

As illustrated in (b) of FIG. 19, each of first holes 21 and second hole 22 is not provided at center 10a of housing 10 but provided in peripheral region 10b (see FIG. 12) different from center 10a when heat sensor 1i is viewed from central axis J1.

Two first holes 21 are provided at bottom surface part 16a of projection part 16. Each of first holes 21 is formed along the outer periphery of bottom surface part 16a and has an arc shape when heat sensor 1i is viewed from central axis J1. Note that the shape of first hole 21 is not limited to the arc shape and may have a shape other than the arc shape. The shape of first hole 21 may be of a shape, for example, a polygon, an oval, a crescent, or a shape obtained by combining together the aforementioned shapes. Moreover, first holes 21 are arranged in rotational symmetry with respect to central axis J1 as a center when heat sensor 1i is viewed from central axis J1. Note that first holes 21 may not be arranged in rotational symmetry with respect to central axis J1 as a center.

Four heat detection units 30 are arranged in housing 10. Two of four heat detection units 30 are provided at positions in correspondence with first holes 21 and other two heat detection units 30 are provided at positions not in correspondence with first holes 21 when heat sensor 1i is viewed from central axis J1. More specifically, two heat detection units 30 are arranged at the positions overlapping first holes 21 and other two heat detection units 30 are arranged at the positions not overlapping first holes 21. Other two heat detection units 30 are covered by bottom surface part 16a when viewed from central axis J1. As is the case with heat sensor 1i of Variation 9, first holes 21 and heat detection units 30 do not necessarily have to be provided at the overlapping positions and may be provided at non-overlapping positions when viewed from central axis J1.

As illustrated in heat sensors 1C to 1i of Variations 3 to 9, heat detection units 30 are arranged in peripheral region 10b different from center 10a of housing 10 when heat sensors 1C to 1i are viewed from central axis J1. Note that peripheral region 10b of Variations 3 to 9 is located more closely to the outer periphery than to center 10a.

Since the vertical airflow flows while approaching housing 10 in peripheral region 10b, it is possible to reduce the projection dimension of heat detection units 30 required for the contact with the vertical airflow. Thus, arranging heat detection units 30 in peripheral region 10b as is the case with Variations 3 to 9 makes it possible to reduce the projection dimension of heat detection unit 30 in the direction of central axis J1, compared to, for example, a case where heat detection units 30 are arranged at center 10a of housing 10. Consequently, it is possible to make heat sensors 1C to 1i thinner.

### OTHER EMBODIMENT

Heat sensors 1 to 1i of the present disclosure have been described above based on the aforementioned embodiments, but the present disclosure is not limited to the embodiment described above.

For example, heat sensors 1 to 1i may also function as a smoke detection unit which detects smoke. Moreover, heat sensors 1 to 1i may be disposed not only on the ceiling but also on a wall. Heat sensors 1 to 1i may be supplied with a power by a commercial power source or may be supplied with a power by a battery provided inside of housing 10.

For example, the shapes of housing 10 of heat sensors 1 to 1i are not limited to a cylindrical shape and may be a square tubular shape.

### REFERENCE MARKS IN THE DRAWINGS

- 1, 1A, 1B, 1C, 1D, 1E, 1F, 1G, 1H, 1i: heat sensor
- 10: housing
- 10a: center
- 10b: peripheral region
- 11: bottom part
- 12: side part
- 13: opening part
- 16: projection part
- 16a: bottom surface part
- 16b: side surface part
- 21: first hole
- 22: second hole
- 25: inner path
- 30: heat detection unit
- 31: support unit
- 32: heat detection element
- 40: component mounted substrate
- 41: substrate body
- 50: control unit
- J1: central axis

## Claims

1. A heat sensor (1), comprising:
a housing (10) of a cylindrical shape having a bottom part (11);
a plurality of heat detection units (30) configured to detect heat of gas, each heat detection unit (30) including a chip thermistor; and
a component mounted substrate (40) provided in the housing (10) and fixed at an inner bottom of the bottom part (11) of the housing (10), the component mounted substrate (40) comprises a substrate body (41), having a plate-like central part (41c) and support units (31) extending outwardly from the central part (41c), a control unit (50) and said chip thermistors,
wherein the housing (10) has a plurality of holes (21, 22) at least one of which is an inlet of gas and at least one of which is an outlet of gas,
the plurality of holes (21, 22) comprising a plurality of first holes (21) and a plurality of second holes (22) for causing gas flowing via an inner path (25) from one side of the housing (10) to flow out of another side of the housing (10),
the heat detection units (30) are arranged in a peripheral region (10b) different from a center (10a) of the housing (10) when the heat sensor (1) is viewed in an axial direction of a central axis (J1) of the housing (10), the central axis (J1) being an axis of rotational symmetry,
a control unit (50) is mounted at the central part (41c) of the substrate body (41), and
each of the chip thermistors is mounted at an end part of each support unit (31) arranged so as to make contact with gas passing through the inner path (25).

2. The heat sensor (1) according to claim 1,
wherein each of the plurality of holes (21, 22) is not provided at the center (10a) of the housing (10) but provided in the peripheral region (10b) when the heat sensor (1) is viewed in the axial direction of the central axis (J1).

3. The heat sensor (1) according to claim 2,
wherein the housing (10) has a projection part (16) of a cylindrical shape which projects outwardly from the bottom part (11), and
out of the plurality of holes (21, 22),
the first holes (21) are provided at a bottom surface part (16a) of the projection part (16), and
the second holes (22) are provided at a side surface part (16b) of the projection part (16).

4. The heat sensor (1) according to claim 3,
wherein the heat detection units (30) are arranged in correspondence with the first holes (21) out of the plurality of holes (21, 22) when the heat sensor (1) is viewed in the direction of the central axis (J1).

5. The heat sensor (1) according to any of claims 1 to 4, wherein the control unit (50) is configured to determine presence or absence of fire based on a detection result obtained at the heat detection units (30),
wherein when the heat sensor (1) is viewed in the direction of the central axis (J1),
the control unit (50) is arranged at the center (10a) of the housing (10) and,
the chip thermistors are arranged more closely to an outer periphery than the control unit (50).

6. The heat sensor (1) according to any one of claims 1 to 5,
wherein the peripheral region (10b) is located more closely to an outer periphery of the housing (10) than to the center (10a) of the housing (10) when the heat sensor (1) is viewed in the direction of the central axis (J1).

## Patentansprüche

1. Wärmesensor (1), umfassend:
ein Gehäuse (10) zylindrischer Form, das einen Bodenteil (11) aufweist;
eine Mehrzahl von Wärmeerfassungseinheiten (30), die konfiguriert sind, Wärme von Gas zu erfassen, wobei jede Wärmeerfassungseinheit (30) einen Chip-Thermistor enthält; und
ein komponentenmontiertes bzw. -bestücktes Substrat (40), das in dem Gehäuse (10) bereitgestellt und an einem Innenboden des Bodenteils (11) des Gehäuses (10) befestigt ist, wobei das komponentenbestückte Substrat (40) einen Substratkörper (41) mit einem plattenartigen zentralen Teil bzw. Mittelteil (41c) und Stütz- bzw. Trägereinheiten (31), die sich von dem Mittelteil (41c) nach außen erstrecken, eine Steuer- bzw. Regeleinheit (50) und die Chip-Thermistoren umfasst,
wobei das Gehäuse (10) eine Mehrzahl von Löchern (21, 22) aufweist, von denen zumindest eines ein Gaseinlass und zumindest eines ein Gasauslass ist, wobei die Mehrzahl von Löchern (21, 22) eine Mehrzahl von ersten Löchern (21) und eine Mehrzahl von zweiten Löchern (22) umfassen, um zu bewirken, dass Gas, das über einen Innenpfad (25) von einer Seite des Gehäuses (10) strömt, aus einer anderen Seite des Gehäuses (10) ausströmt,
die Wärmeerfassungseinheiten (30) in einem Rand- bzw. Umfangsbereich (10b) angeordnet sind, der sich von einer Mitte bzw. einem Zentrum (10a) des Gehäuses (10) unterscheidet, und zwar bei Betrachtung des Wärmesensors (1) in einer axialen Richtung einer Mittelachse bzw. zentralen Achse (J1) des Gehäuses (10), wobei die Mittelachse (J1) eine Rotationssymmetrieachse ist,
eine Steuer- bzw. Regeleinheit (50) an dem Mittelteil (41c) des Substratkörpers (41) montiert ist, und
jeder der Chip-Thermistoren an einem Endteil jeder Trägereinheit (31) montiert ist, der bzw. die so angeordnet ist, dass er bzw. sie mit Gas in Kontakt kommt, das durch den Innenpfad (25) verläuft.

2. Wärmesensor (1) nach Anspruch 1,
wobei jedes der Mehrzahl von Löchern (21, 22) nicht an der Mitte (10a) des Gehäuses (10) bereitgestellt ist, sondern in dem Umfangsbereich (10b) bereitgestellt ist, wenn der Wärmesensor (1) in der axialen Richtung der Mittelachse (J1) betrachtet wird.

3. Wärmesensor (1) nach Anspruch 2,
wobei das Gehäuse (10) einen Vorsprungsteil (16) zylindrischer Form aufweist, der von dem Bodenteil (11) nach außen vorspringt, und
von der Mehrzahl von Löchern (21, 22)
die ersten Löcher (21) an einem Bodenflächen- bzw. -oberflächenteil (16a) des Vorsprungsteils (16) bereitgestellt sind und
die zweiten Löcher (22) an einem Seitenflächen- bzw. -oberflächenteil (16b) des Vorsprungsteils (16) bereitgestellt sind.

4. Wärmesensor (1) nach Anspruch 3,
wobei die Wärmeerfassungseinheiten (30) bei Betrachtung des Wärmesensors (1) in der Richtung der Mittelachse (J1) in Entsprechung mit den ersten Löchern (21) der Mehrzahl von Löchern (21, 22) angeordnet sind.

5. Wärmesensor (1) nach einem der Ansprüche 1 bis 4, wobei die Steuer- bzw. Regeleinheit (50) konfiguriert ist, ein Vorhandensein oder Nichtvorhandensein von Feuer basierend auf einem an den Wärmeerfassungseinheiten (30) erhaltenen Erfassungsergebnisses zu bestimmen,
wobei bei Betrachtung des Wärmesensors (1) in der Richtung der Mittelachse (J1)
die Steuer- bzw. Regeleinheit (50) an der Mitte (10a) des Gehäuses (10) angeordnet ist und
die Chip-Thermistoren näher an einem Außenumfang angeordnet sind als die Steuer- bzw. Regeleinheit (50).

6. Wärmesensor (1) nach einem der Ansprüche 1 bis 5,
wobei der Umfangsbereich (10b) bei Betrachtung des Wärmesensors (1) in der Richtung der Mittelachse (J1) näher an einem Außenumfang des Gehäuses (10) als an der Mitte (10a) des Gehäuses angeordnet ist.

## Revendications

1. Capteur de chaleur (1), comprenant :
un boîtier (10) de forme cylindrique comportant une partie de fond (11) ;
une pluralité d'unités de détection de chaleur (30) configurées pour détecter la chaleur d'un gaz, chaque unité de détection de chaleur (30) incluant une thermistance sous forme de puce ; et
un substrat monté sur composant (40) disposé dans le boîtier (10) et fixé au niveau d'un fond intérieur de la partie de fond (11) du boîtier (10), le substrat monté sur composant (40) comprenant un corps de substrat (41) comportant une partie centrale du genre plaque (41c) et des unités de support (31) s'étendant vers l'extérieur à partir de la partie centrale (41c), une unité de commande (50) et lesdites thermistances sous forme de puces,
dans lequel le boîtier (10) comporte une pluralité de trous (21, 22), dont l'un au moins est une entrée de gaz et l'un au moins est une sortie de gaz,
la pluralité de trous (21, 22) comprenant une pluralité de premiers trous (21) et une pluralité de deuxièmes trous (22) pour amener du gaz s'écoulant par le biais d'un trajet intérieur (25) à partir d'un côté du boîtier (10) à s'échapper d'un autre côté du boîtier (10),
les unités de détection de chaleur (30) sont agencées dans une région périphérique (10b) différente d'un centre (10a) du boîtier (10) lorsque le capteur de chaleur (1) est vu dans une direction axiale d'un axe central (J1) du boîtier (10), l'axe central (J1) étant un axe de symétrie de rotation,
une unité de commande (50) est montée au niveau de la partie centrale (41c) du corps de substrat (41), et
chacune des thermistances sous forme de puces est montée au niveau d'une partie d'extrémité de chaque unité de support (31) agencée de manière à entrer en contact avec du gaz traversant le trajet intérieur (25).

2. Capteur de chaleur (1) selon la revendication 1,
dans lequel aucun de la pluralité de trous (21, 22) n'est disposé au niveau du centre (10a) du boîtier (10) mais chacun est disposé dans la région périphérique (10b) lorsque le capteur de chaleur (1) est vu dans la direction axiale de l'axe central (J1).

3. Capteur de chaleur (1) selon la revendication 2,
dans lequel le boîtier (10) comporte une partie faisant saillie (16) de forme cylindrique, laquelle fait saillie vers l'extérieur à partir de la partie de fond (11), et
parmi la pluralité de trous (21, 22),
les premiers trous (21) sont disposés au niveau d'une partie de surface inférieure (16a) de la partie faisant saillie (16), et
les deuxièmes trous (22) sont disposés au niveau d'une partie de surface latérale (16b) de la partie faisant saillie (16).

4. Capteur de chaleur (1) selon la revendication 3,
dans lequel les unités de détection de chaleur (30) sont agencées en correspondance avec les premiers trous (21) parmi la pluralité de trous (21, 22) lorsque le capteur de chaleur (1) est vu dans la direction de l'axe central (J1).

5. Capteur de chaleur (1) selon l'une quelconque des revendications 1 à 4, dans lequel l'unité de commande (50) est configurée pour déterminer la présence ou l'absence de feu sur la base d'un résultat de détection obtenu au niveau des unités de détection de chaleur (30),
dans lequel, lorsque le capteur de chaleur (1) est vu dans la direction de l'axe central (J1),
l'unité de commande (50) est agencée au niveau du centre (10a) du boîtier (10) et,
les thermistances sous forme de puces sont agencées plus à proximité d'une périphérie extérieure que l'unité de commande (50).

6. Capteur de chaleur (1) selon l'une quelconque des revendications 1 à 5,
dans lequel la région périphérique (10b) se situe plus à proximité d'une périphérie extérieure du boîtier (10) que du centre (10a) du boîtier (10) lorsque le capteur de chaleur (1) est vu dans la direction de l'axe central (J1).
